# EUROPÄISCHE PATENTSCHRIFT

(11) **EP 1 101 672 B1**
(45) Veröffentlichungstag und Bekanntmachung des Hinweises auf die Patenterteilung: **02.11.2005**
(21) Anmeldenummer: 00123469.9
(22) Anmeldetag: 07.11.2000
(51) Int. Cl.: B60R 25/04

(54) **Sicherungssystem für Kraftfahrzeuge**
Security system for a vehicle
Système de sécurité pour véhicules

(30) Priorität: 15.11.1999 DE 19954757
(43) Veröffentlichungstag der Anmeldung: 23.05.2001
(73) Patentinhaber: Volkswagen Aktiengesellschaft, 38436 Wolfsburg (DE)
(72) Erfinder: Lindemann, Heinz-Dieter, 38104 Braunschweig (DE)

(56) Entgegenhaltungen:
- EP-A- 0 692 412
- WO-A-93/05987
- DE-A- 4 405 708
- DE-A- 19 758 467

## Beschreibung

Die Erfindung betrifft ein Sicherungssystem für Kraftfahrzeuge nach dem Oberbegriff des Anspruchs 1.

In Kraftfahrzeugen werden Sicherungssysteme eingesetzt, die die für die Fortbewegung des Fahrzeugs wichtigen Komponenten nur dann aktivieren sollen, wenn ein Berechtigter sich durch einen Schlüssel mit einem gültigen Berechtigungscode ausweisen kann. Eine Wegfahrsperre nimmt daraufhin unter Einbeziehung des im Schlüssel gespeicherten Berechtigungscodes und der Codes der Wegfahrsperre und der Fahrzeugkomponenten über eine Kommunikation mit den Fahrzeugkomponenten eine Code-Prüfung vor. Bei Gültigkeit und Zusammenspiel aller Codes werden dann die Fahrzeugkomponenten aktiviert. Wird ein Schlüssel mit einem anderen Berechtigungscode verwendet und/oder wurden Fahrzeugkomponenten gegen solche mit einem ungültigen Code ausgetauscht, so findet keine Aktivierung der Fahrzeugkomponenten durch die Wegfahrsperre statt.

Aus der EP 0 682 608 B1 ist ein Kraftfahrzeugsicherungssystem im Sinne des Oberbegriffs von Anspruch 1 bekannt mit einem codierten Schlüssel, einem Lesegerät zum Ablesen des Codes vom Schlüssel, einem Datentransferbus und einer Vielzahl von mit dem Datentransferbus verbundenen Einheiten. Die Einheiten sind mit je einem Signalprozessor ausgestattet, die empfangene Codes auswerten und auf Gültigkeit prüfen. Bei Empfang eines ungültigen Codes wird ein Fehlercode an das Lesegerät oder an andere Eigenheiten gesendet, wobei zumindest einige ausgewählte Einheiten andere an den Datentransferbus angeschlossenen Einheiten betriebsunfähig geschaltet werden.

Es besteht die Möglichkeit, daß nach einem Diebstahl Fahrzeugkomponenten so manipuliert werden, daß sie auch ohne Aktivierung durch die Wegfahrsperre funktionieren und keine Freigabeanfrage an die Wegfahrsperre übermitteln. Dann ist kein Schlüssel mit einem gültigen Berechtigungscode nötig, um das Kraftfahrzeug in Betrieb zu nehmen. Es besteht aber auch die weitergehende Manipulationsmöglichkeit, gültige Codes bei anderen Kraftfahrzeugen auszuspähen und zu simulieren. In diesem Falle bietet das Empfangen und Auswerten der Codes alleine nur eine eingeschränkte Sicherheit gegen Manipulation.

Der Erfindung liegt die Aufgabe zugrunde, ein Sicherungssystem für Kraftfahrzeuge dahingehend zu verbessern, daß Manipulationen sicher erkannt werden können und Eingriffe in den Betriebszustand des Kraftfahrzeugs ermöglicht werden.

Diese Aufgabe wird bei einem Sicherungssystem nach dem Oberbegriff des Anspruchs 1 durch die Merkmale dieses Anspruchs gelöst. Weiterbildungen und vorteilhafte Ausgestaltungen der Erfindung ergeben sich aus den Unteransprüchen.

Das erfindungsgemäße Sicherungssystem beschränkt sich nicht nur darauf, Codes zu empfangen und auswerten, sondern die Kommunikation zwischen der Wegfahrsperre und dem Motorsteuergerät mitzulesen und auszuwerten. Hierbei werden auch Berechnungen berücksichtigt, die die Wegfahrsperre und/oder das Motorsteuergerät mit denen empfangenen Codes durchführen und die Antwortcodes, die sie daraufhin zurückschicken. Manipulationen werden so wesentlich schwieriger, da durch Berechnungen der übermittelte Code variiert werden kann und somit das Ausspähen des übermittelten Codes nicht ausreicht. Die Aktivierung weiterer Fahrzeugkomponenten kann so von der Übermittlung zusammengehörender gültiger Codes zwischen der Wegfahrsperre und dem Motorsteuergerät abhängig gemacht werden.

Ein großer Vorteil besteht darin, daß die weiteren Fahrzeugkomponenten nicht mit der Wegfahrsperre kommunizieren müssen, was den Umfang an Datentransfer erheblich steigern würde und dadurch den Datenbus belasten würde. Dennoch profitieren diese Fahrzeugkomponenten von der Kommunikation zwischen der Wegfahrsperre und dem Motorsteuergerät.

Gemäß einer Weiterbildung können von der Überwachungseinheit die gleichen Berechnungen durchgeführt werden, wie von der Wegfahrsperre und/oder dem Motorsteuergerät beim gegenseitigen Austausch der Codes.

Hierdurch wird erreicht, daß die gleichen Ergebnisse wie bei der Wegfahrsperre und dem Motorsteuergerät erzeugt werden und somit eine lückenlose Überprüfung auf Gültigkeit möglich ist.

Die Überwachungseinheit kann an einen Datenbus angeschlossen sein, an den auch die Wegfahrsperre und das Motorsteuergerät angeschlossen sind.

Bei dieser Ausführung kann ein vorhandenes Sicherungssystem auf einfache Weise mit den erfindungsgemäßen Maßnahmen ergänzt werden.

Eine alternative Möglichkeit besteht darin, die Überwachungseinheit in eine Datenleitung zwischen der Wegfahrsperre und dem Motorsteuergerät zwischenzuschalten.

In diesem Fall muß die Überwachungseinheit zwingend für die Kommunikation zwischen der Wegfahrsperre und dem Motorsteuergerät verwendet werden. Eine Trennung der Überwachungseinheit vom Datenweg zwecks Manipulation wäre nicht möglich.

Eine Weiterbildung sieht vor, daß die Überwachungseinheit in eine weitere Fahrzeugkomponente integriert ist.

Dabei kann die Überwachungseinheit als Softwarekomponente in die Steuersoftware der weiteren Fahrzeugkomponenten integriert sein.

Diese Maßnahme spart nicht nur Platz und ermöglicht in der Ausführung als Softwarekomponente eine einfache Ergänzung eines bestehenden Fahrzeugkonzepts oder eine einfache Nachrüstung, sondern erschwert auch Manipulationen, die weitere Fahrzeugkomponente ohne gültigen Code zu aktivieren.

Eine vorteilhafte Weiterbildung sieht vor, daß die Überwachungseinheit einmalig bei der Fahrzeugherstellung mit den korrekten Codes der Wegfahrsperre und des Motorsteuergerätes programmierbar ist. Dadurch ist eine Manipulationsmöglichkeit beseitigt, eine Überwachungseinheit aus einem anderen Fahrzeug auszubauen und wiederzuverwenden.

Nachfolgend wird die Erfindung anhand der Zeichnung erläutert. In dieser zeigen:
- Fig. 1: ein Blockschaltbild eines Sicherungssystems nach der Erfindung und
- Fig. 2: ein Flußdiagramm des Ablaufs der Auswertung.

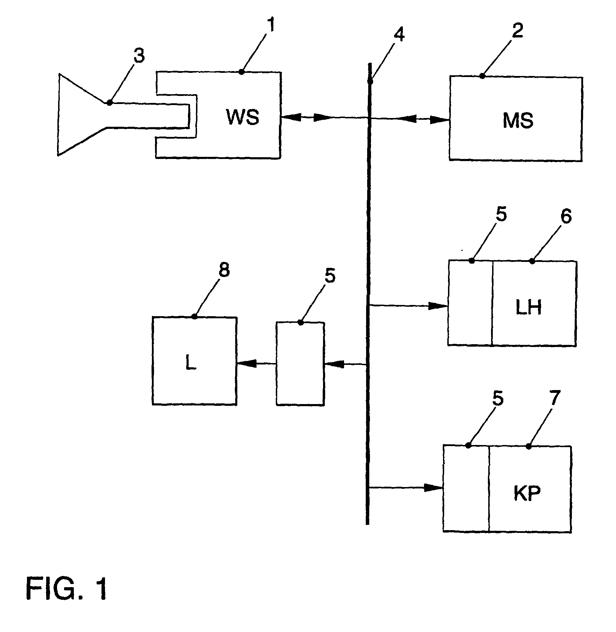

Fig. 1 zeigt ein Blockschaltbild eines Sicherungssystems nach der Erfindung. Dort sind eine Wegfahrsperre 1 und ein Motorsteuergerät 2 dargestellt, die an einen Datenbus 4 angeschlossen sind. In einem Schlüssel 3 ist ein Berechtigungscode gespeichert, der bei der Kommunikation zwischen der Wegfahrsperre 1 und dem Motorsteuergerät 2 berücksichtigt wird. Die Kommunikation zwischen der Wegfahrsperre 1 und dem Motorsteuergerät 2 läuft über einen Datenbus 4. An diesen Datenbus 4 sind mehrere Überwachungseinheiten 5 angeschlossen. Während eine Überwachungseinheit 5 separat vorhanden und über eine Signalleitung mit einer weiteren Fahrzeugkomponente 8, hier einer Beleuchtungseinrichtung L, verbunden ist, sind andere Überwachungseinheiten 5 in weitere Fahrzeugkomponenten 6 und 7, nämlich in eine Lenkhilfe LH und in eine Kraftstoffpumpe KP integriert. Da auf dem gesamten Datenbus 4 die Kommunikation zwischen der Wegfahrsperre 1 und dem Motorsteuergerät 2 empfangen und gelesen werden kann, können alle Überwachungseinheiten 5 die Datenkommunikation mitlesen.

Wenn das Motorsteuergerät 2 zum Startern und Betrieb des Motors einen Startbefehl erhält, wird über den Datenbus 4 eine Freigabeanfrage an die Wegfahrsperre 1 übermittelt. Die Wegfahrsperre 1 empfängt diese Freigabeanfrage und wertet sie unter Berücksichtigung des im Schlüssel 3 gespeicherten Berechtigungscodes aus. Zur Steigerung der Sicherheit gegen Manipulation wird aus dem empfangen Code des Motorsteuergerätes 2, des Codes der Wegfahrsperre 1 und des Berechtigungscodes des Schlüssels 3 ein Antwortsignal berechnet und an das Motorsteuergerät 2 übertragen. Vom Motorsteuergerät 2 kann nun ebenfalls eine Berechnung und Übermittlung eines Antwortsignals zur Wegfahrsperre 1 durchgeführt werden. Die Kommunikation zwischen der Wegfahrsperre 1 und dem Motorsteuergerät 2 kann auch mehrfach durchgeführt werden. Dabei wird durch die Berechnungen das übertragene Datentelegram jeweils geändert, so daß durch reines Abhören des Datentelegramms ohne Kenntnis der Codes und dessen Berechnungsverfahrens die Berechnungen generierter Datentelegramme nicht simuliert werden können.

Die Kommunikation wird von der Wegfahrsperre 1 ausgewertet und bei Gültigkeit der zusammengehörenden Codes wird das Motorsteuergerät 2 aktiviert. Wenn im Falle eines Diebstahls der Schlüssel 3 nicht zur Verfügung steht, kommt eine Kommunikation zwischen der Wegfahrsperre 1 und dem Motorsteuergerät 2 mit gültigen Codes nicht zustande. Das Motorsteuergerät 2 kann dann nicht aktiviert werden.

Nun könnte aber versucht werden, ein Motorsteuergerät einzubauen, das manipuliert wurde und gar keine oder eine ungültige Freigabeanfrage an die Wegfahrsperre 1 übermittelt, aber trotzt ausbleibendem Aktivierungsbefehl automatisch aktiviert wird. Wenn in diesem Fall alle weiteren Fahrzeugkomponenten nicht von der Wegfahrsperre 1 beeinflußbar sind, wäre damit die Wirkung der Wegfahrsperre aufgehoben. Um zusätzliche Eingriffe in das Betriebsverhalten des Fahrzeugs zu ermöglichen, sind erfindungsgemäß weiteren Fahrzeugkomponenten 6, 7 und 8 Überwachungseinheiten 5 zugeordnet, die die Kommunikation zwischen der Wegfahrsperre 1 und dem Motorsteuergerät 2 über den Datenbus 4 mitlesen und auswerten. Diese Überwachungseinheiten 5 aktivieren die zugeordneten Fahrzeugkomponenten 6, 7 und 8 erst dann, wenn zusammengehörige gültige Codes in den Datentelegrammen enthalten sind. Dementsprechend erfolgt keine Aktivierung, wenn ein Motorsteuergerät verwendet wird, das sich nicht erwartungsgemäß verhält. Auch wenn weitere Fahrzeugkomponenten ausgetauscht werden, so daß das Fahrzeug fahrtüchtig wird, kann durch die erfindungsgemäße Maßnahme erreicht werden, daß wenigstens andere Fahrzeugkomponenten nicht funktionsfähig sind, sodaß dadurch der Gebrauchswert oder Wiederverkaufswert erheblich eingeschränkt wird.

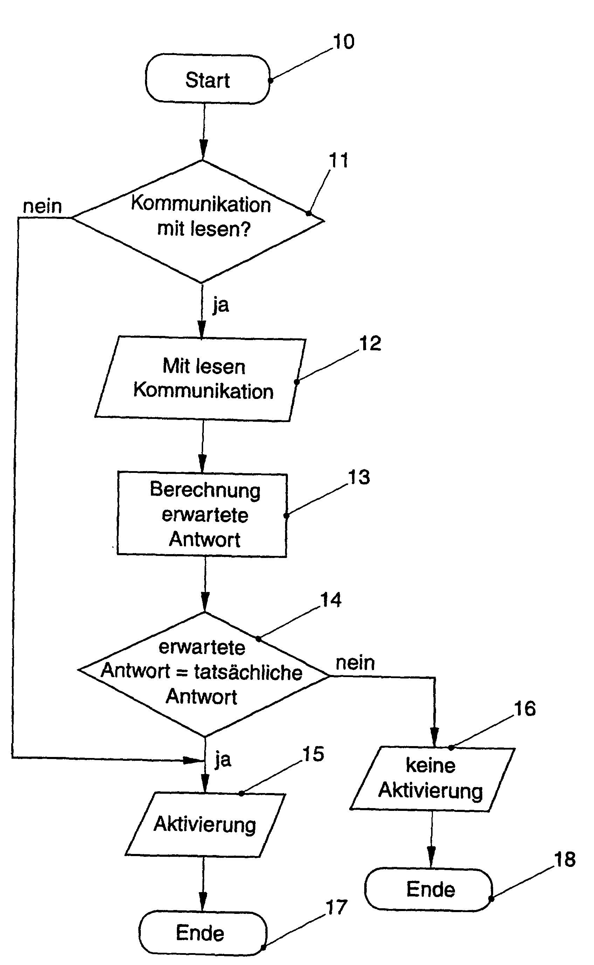

Fig. 2 zeigt ein Flußdiagramm der Funktionsweise der Überwachungseinheiten 5. Der Programmablauf beginnt mit dem Startsymbol 10. Danach wird, dargestellt durch ein Verzweigungssymbol 11, zuerst entschieden, ob ein Mitlesen der Kommunikation erfolgen soll. Bei einem Start nach längerem Stillstand soll generell eine Überwachung durchgeführt und daher die Kommunikation mitgelesen werden. Bei einem Start nach kurzem Stillstand, z. B. nach Abschalten des Motors vor einer Ampel oder einer geschlossenen Bahnschranke kann auf eine erneute Überwachung verzichtet werden. Das für die Ja-Entscheidung nachfolgende Eingabesymbol 12 zeigt das Mitlesen der Kommunikation zwischen der Wegfahrsperre 1 und dem Motorsteuergerät 2 über den Datenbus 4. Anschließend werden, dargestellt durch das Verarbeitungssymbol 13, aus den Datentelegrammen Eingangssignale selektiert und mit denselben Berechnungsverfahren, wie sie auch von der Wegfahrsperre 1 und dem Motorsteuergerät 2 angewendet werden, erwartete Antwortsignale errechnet.

Nach dem ermittelten Ergebnis wird, dargestellt durch das Verzweigungssymbol 14 entschieden, ob eine Aktivierung der Fahrzeugkomponenten erfolgt oder nicht. Eine Aktivierung wird durch ein Ausgabesymbol 15 dargestellt und eine Nicht-Aktivierung durch ein Ausgabesymbol 16. Daran schließt sich jeweils das Programmende durch Endesymbole 17 und 18 an.

Soll bei einem Start nach kurzem Stillstand keine erneute Überwachung durchgeführt werden, wird durch das Verzweigungssymbol 11 direkt zum Ausgabesymbol 15, verzweigt und die zugeordnete Fahrzeugkomponente aktiviert.

### BEZUGSZEICHENLISTE

- 1: Wegfahrsperre WS
- 2: Motorsteuerung MS
- 3: Schlüssel
- 4: Datenbus
- 5: Überwachungseinheit
- 6: weitere Fahrzeugkomponente, Lenkhilfe LH
- 7: weitere Fahrzeugkomponente, Kraftstoffpumpe KP
- 8: weitere Fahrzeugkomponente, Beleuchtung L
- 9 10: Startsymbol
- 11: Entscheidungssymbol
- 12: Eingabesymbol
- 13: Verarbeitungssysmbol
- 14: Entscheidungssymbol
- 15: Ausgabesymbol
- 16: Ausgabesymbol
- 17: Endesymbol
- 18: Endesymbol

## Patentansprüche

1. Sicherungssystem für ein Kraftfahrzeug, bei welchem vor einem Startvorgang Codes zwischen einer Wegfahrsperre (1) und einem Motorsteuergerät (2) übertragen werden, **dadurch gekennzeichnet, dass** von einer Überwachungseinheit (5) die Kommunikation zwischen der Wegfahrsperre (1) und dem Motorsteuergerät (2) mitgelesen und ausgewertet wird, und daß nur bei Austausch von Datentelegrammen, die zusammengehörenden gültigen Codes entsprechen,
der Startvorgang ermöglicht wird oder durch die Überwachungseinheit (5) wenigstens eine weitere Fahrzeugkomponente (6) aktiviert wird,
wobei hierbei Berechnungen berücksichtigt werden, die die Wegfahrsperre und/oder das Motorsteuergerät mit den empfangenen Codes durchführen um einen Antwortcode zu erhalten.

2. Sicherungssystem nach Anspruch 1, **dadurch gekennzeichnet, daß** von der Überwachungseinheit (5) die gleichen Berechnungen durchgeführt werden, wie von der Wegfahrsperre (1) und/oder dem Motorsteuergerät (2) bei einem gegenseitigen Austausch der Codes.

3. Sicherungssystem nach Anspruch 1 oder 2, **dadurch gekennzeichnet, daß** die Überwachungseinheit (5) an einen Datenbus (4) angeschlossen ist, an den auch die Wegfahrsperre (1) und das Motorsteuergerät (2) angeschlossen sind.

4. Sicherungssystem nach einem der vorhergehenden Ansprüche, **dadurch gekennzeichnet, daß** die Überwachungseinheit (5) in eine Datenleitung zwischen der Wegfahrsperre (1) und dem Motorsteuergerät (2) zwischengeschaltet ist.

5. Sicherungssystem nach einem der vorhergehenden Ansprüche, **dadurch gekennzeichnet, daß** die Überwachungseinheit (5) in eine der weiteren Fahrzeugkomponenten (6; 7) integriert ist.

6. Sicherungssystem nach einem der vorhergehenden Ansprüche, **dadurch gekennzeichnet, daß** die Überwachungseinheit (5) als Softwarekomponente in die Steuersoftware der weiteren Fahrzeugkomponenten (6; 7) integriert ist.

7. Sicherungssystem nach einem der vorhergehenden Ansprüche, **dadurch gekennzeichnet, daß** die Überwachungseinheit (5) einmalig bei der Fahrzeugherstellung mit den korrekten Codes der Wegfahrsperre (1) und des Motorsteuergerätes (2) programmierbar ist.

## Claims

1. Security system for a motor vehicle, in which codes are transmitted between an immobilizer (1) and an engine controller (2) before a starting process, **characterized in that** the communication between the immobilizer (1) and the engine controller (2) is also read and evaluated by a monitoring unit (5), and **in that** the starting process is permitted or at least one further vehicle component (6) is activated by the monitoring unit (5) only when data telegrams which match associated valid codes are exchanged, calculations which the immobilizer and/or the engine controller perform using the received codes being taken into account in the process in order to obtain a response code.

2. Security system according to Claim 1, **characterized in that** the monitoring unit (5) performs the same calculations as the immobilizer (1) and/or the engine controller (2) when they exchange codes.

3. Security system according to Claim 1 or 2, **characterized in that** the monitoring unit (5) is connected to a data bus (4) to which the immobilizer (1) and the engine controller (2) are also connected.

4. Security system according to one of the preceding claims, **characterized in that** the monitoring unit (5) is inserted in a data line between the immobilizer (1) and the engine controller (2).

5. Security system according to one of the preceding claims, **characterized in that** the monitoring unit (5) is integrated in one of the further vehicle components (6; 7).

6. Security system according to one of the preceding claims, **characterized in that** the monitoring unit (5) is integrated in the control software of the further vehicle components (6; 7) in the form of a software component.

7. Security system according to one of the preceding claims, **characterized in that** the monitoring unit (5) can be programmed once with the correct codes of the immobilizer (1) and of the engine controller (2) when vehicle is manufactured.

## Revendications

1. Système de sécurité pour un véhicule automobile dans lequel, avant une opération de démarrage, des codes sont transmis entre un contact de démarrage (1) et un appareil de commande du moteur (2), **caractérisé en ce que** la communication entre le contact de démarrage (1) et l'appareil de commande du moteur (2) est lue et évaluée par une unité de surveillance (5), et **en ce que** l'opération de démarrage n'est autorisée que par l'échange de télégrammes de données, qui correspondent à des codes valables associés ou qu'au moins un autre composant du véhicule (6) est activé par l'unité de surveillance (5), dans lequel on tient en l'occurrence compte de calculs que le contact de démarrage et/ou l'appareil de commande du moteur effectuent avec les codes reçus pour obtenir un code de réponse.

2. Système de sécurité selon la revendication 1, **caractérisé en ce que** l'unité de surveillance (5) effectue les mêmes calculs que le contact de démarrage (1) et/ou l'appareil de commande du moteur (2) lors d'un échange mutuel des codes.

3. Système de sécurité selon la revendication 1 ou 2, **caractérisé en ce que** l'unité de surveillance (5) est raccordée à un bus de données (4), auquel le contact de démarrage (1) et l'appareil de commande du moteur (2) sont également raccordés.

4. Système de sécurité selon l'une quelconque des revendications précédentes, **caractérisé en ce que** l'unité de surveillance (5) est intercalée dans une ligne de données entre le contact de démarrage (1) et l'appareil de commande du moteur (2).

5. Système de sécurité selon l'une quelconque des revendications précédentes, **caractérisé en ce que** l'unité de surveillance (5) est intégrée dans un des autres composants du véhicule (6; 7).

6. Système de sécurité selon l'une quelconque des revendications précédentes, **caractérisé en ce que** l'unité de surveillance (5) est intégrée comme composant de logiciel dans le logiciel de commande des autres composants du véhicule (6; 7).

7. Système de sécurité selon l'une quelconque des revendications précédentes, **caractérisé en ce que** l'unité de surveillance (5) peut être programmée une seule fois lors de la construction du véhicule avec les codes corrects du contact de démarrage (1) et de l'appareil de commande du moteur (2).
